# EUROPEAN PATENT SPECIFICATION

(11) **EP 0 908 091 B1**
(45) Date of publication and mention of the grant of the patent: **18.12.2002**
(21) Application number: 98203322.7
(22) Date of filing: 01.10.1998
(51) Int. Cl.: A01J 5/08

(54) **A teat cup lining to be applied in a teat cup for milking animals**
Zitzengummi für Zitzenbecher zum Melken von Tieren
Doublure de manchon trayeur pour utilisation dans un manchon trayeur pour la traite d'animaux

(30) Priority: 08.10.1997 NL 1007224
(43) Date of publication of application: 14.04.1999
(73) Proprietor: MAASLAND N.V., 3155 PD Maasland (NL)
(72) Inventor: van den Berg, Karel, 2971 BR Bleskensgraaf (NL); Fransen, René, 3135 ZD Vlaardingen (NL)
(74) Representative: Corten, Maurice Jean F.M.

(56) References cited:
- EP-A- 0 347 954
- EP-A- 0 645 079
- US-A- 4 483 272

## Description

The invention relates to a teat cup lining according to the preamble of claim 1.

Such a teat cup lining is known from the European patent application EP 0347954-A2.

The invention aims at providing an alternative teat cup lining.

According to the invention this is achieved in that the bent portion of the discharge line is provided with a profile, e.g. constituted by ribs. In this way the bent portion is strengthened and kept flexible.

According to an inventive feature, the discharge line of the teat cup lining is bent through an angle from 55° to 125°, preferably of approximately 90°.

According to again another inventive feature, the bent discharge line constitutes an integral whole with the remaining part of the teat cup lining, and the bent portion of the discharge line is made of the same material.

According to a further inventive feature, the teat cup lining is made of flexible material, such as e.g. rubber or synthetic material.

The invention also relates to a teat cup which is provided with a teat cup lining in accordance with the invention.

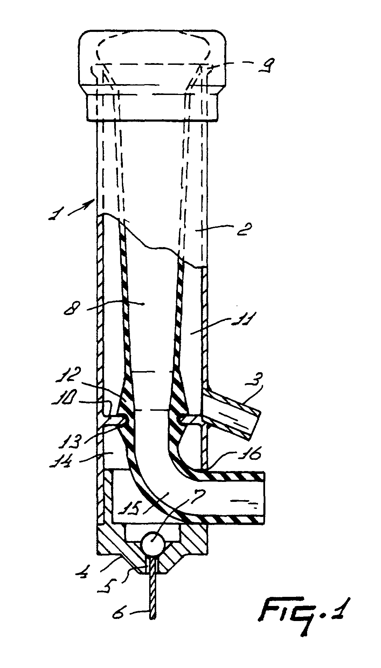

According to an inventive feature, the teat cup comprises an elongated cylindrical housing and in that the end of the bent discharge line is bent through an angle of 90° and is located in the lower space of the cylindrical housing.
The invention will now be explained in further detail with reference to an accompanying drawing in which
Figure 1 shows a teat cup provided with a teat cup lining in accordance with the invention.

Figure 1 shows a teat cup 1 comprising an elongated cylindrical housing 2. The cylindrical housing 2 is made of synthetic material. However, it is also possible to make the cylindrical housing 2 of metal or another kind of rigid material. Near its lower side the cylindrical housing 2 comprises a hose nipple 3 to which a (non-shown) pulsation hose can be connected. The hose nipple 3 constitutes an integral whole with the cylindrical housing 2. Near its lower side the teat cup 1 is provided with a conical seat 4 which is disposed in the teat cup 1 by means of a threaded connection. The conical seat 4 is dimensioned in such a manner that it is capable of cooperating with a conical recess of a teat cup carrier of a (non-shown) milking robot. In the middle of the conical seat 4 there is provided a borehole 5 through which a cable 6 is passed, which cable 6 is provided at its end with a spherical element 7. The spherical element 7 has a diameter which is larger than that of the borehole 5. The cable 6 belongs to a (non-shown) pulling back towards a position of rest on the teat cup carrier of a (non-shown) milking robot.

## Claims

1. A teat cup lining (8) to be applied in a teat cup (1) for milking animals, which teat cup lining (8) is provided near its lower side with a bent discharge line (15), **characterized in that** the bent discharge line (15) is provided with a profile, e.g. constituted by ribs.

2. A teat cup lining as claimed in claim 1, **characterized in that** the discharge line of the teat cup lining (8) is bent through an angle from 55° to 125°, preferably of approximately 90°.

3. A teat cup lining as claimed in any one of the preceding claims, **characterized in that** the bent discharge line (15) constitutes an integral whole with the remaining part of the teat cup lining (8).

4. A teat cup lining as claimed in any one of the preceding claims, **characterized in that** the bent discharge line (15) is made of the same material as the remaining part of the teat cup lining.

5. A teat cup lining as claimed in any one of the preceding claims, **characterized in that** the teat cup lining (8) is made of flexible material, e.g. rubber or synthetic material.

6. A teat cup which is provided with a teat cup lining (8) as claimed in one or more of claims 1-5.

7. A teat cup according to claim 6, **characterized in that** the teat cup comprises an elongated cylindrical housing (2) and **in that** the end of the bent discharge line (15) is bent through an angle of 90° and is located in the lower space (14) of the cylindrical housing (2).

## Patentansprüche

1. Zitzenbecherauskleidung (8) zur Anbringung in einem Zitzenbecher (1) zum Melken von Tieren, wobei die Zitzenbecherauskleidung (8) nahe ihrer Unterseite mit einer gekrümmten Abflußleitung (15) versehen ist,
**dadurch gekennzeichnet, daß** die gekrümmte Abflußleitung (15) ein Profil aufweist, das beispielsweise durch Rippen gebildet ist.

2. Zitzenbecherauskleidung nach Anspruch 1,
**dadurch gekennzeichnet, daß** die Abflußleitung der Zitzenbecherauskleidung (8) in einem Winkel von 55° bis 125°, vorzugsweise von etwa 90° gekrümmt ist.

3. Zitzenbecherauskleidung nach einem der vorhergehenden Ansprüche,
**dadurch gekennzeichnet, daß** die gekrümmte Abflußleitung (15) eine Einheit mit dem übrigen Teil der Zitzenbecherauskleidung (8) bildet.

4. , Zitzenbecherauskleidung nach einem der vorhergehenden Ansprüche,
**dadurch gekennzeichnet, daß** die gekrümmte Abflußleitung (15) aus demselben Material wie der übrige Teil der Zitzenbecherauskleidung hergestellt ist.

5. Zitzenbecherauskleidung nach einem der vorhergehenden Ansprüche,
**dadurch gekennzeichnet, daß** die Zitzenbecherauskleidung (8) aus einem elastischen Material, wie z. B. Gummi oder Kunststoff, hergestellt ist.

6. Zitzenbecher, der mit einer Zitzenbecherauskleidung (8) nach einem oder mehreren der Ansprüche 1 bis 5 versehen ist.

7. Zitzenbecher nach Anspruch 6,
**dadurch gekennzeichnet, daß** der Zitzenbecher ein langgestrecktes zylindrisches Gehäuse (2) umfaßt, **und daß** das Ende der gekrümmten Abflußleitung (15) in einem Winkel von 90° gekrümmt und in dem unteren Raum (14) des zylindrischen Gehäuses (2) angeordnet ist.

## Revendications

1. Garnissage de gobelet trayeur (8) à appliquer dans un gobelet trayeur (1) pour traire des animaux, ledit garnissage de gobelet trayeur (8) étant muni près de son côté inférieur, d'une conduite d'écoulement recourbée (15), **caractérisé en ce que** la conduite d'écoulement recourbée (15) est munie d'un profilé, c'est-à-dire qu'elle est constituée de nervures.

2. Garnissage de gobelet trayeur selon la revendication 1, **caractérisé en ce que** la conduite d'écoulement du garnissage de gobelet trayeur (8) est recourbée selon un angle compris entre 55° et 125°, de préférence d'environ 90°.

3. Garnissage de gobelet trayeur selon l'une quelconque des revendications précédentes, **caractérisé en ce que** la conduite d'écoulement recourbée (15) constitue un ensemble solidaire de la partie restante du garnissage de gobelet trayeur (8).

4. Garnissage de gobelet trayeur selon l'une quelconque des revendications précédentes, **caractérisé en ce que** la conduite d'écoulement recourbée (15) est faite de la même matière que la partie restante du garnissage de gobelet trayeur.

5. Garnissage de gobelet trayeur selon l'une quelconque des revendications précédentes, **caractérisé en ce que** le garnissage de gobelet trayeur (8) est fait d'une matière souple, par exemple du caoutchouc ou une matière synthétique.

6. Gobelet trayeur qui est muni d'un garnissage de gobelet trayeur (8) selon une ou plusieurs des revendications 1 à 5.

7. Gobelet trayeur selon la revendication 6, **caractérisé en ce que** le gobelet trayeur comprend un boîtier cylindrique allongé (2) et **en ce que** l'extrémité de la conduite d'écoulement recourbée (15) est recourbée selon un angle de 90° et est disposée dans l'espace inférieur (14) du boîtier cylindrique (2) .
